## Europäisches Patentamt

## European Patent Office

## Office européen des brevets

(11) Veröffentlichungsnummer: **0 210 333**
**B1**

(12) # EUROPÄISCHE PATENTSCHRIFT

(45) Veröffentlichungstag der Patentschrift:
**27.09.89**

(51) Int. Cl.⁴: **C01B 31/08, C01B 31/10**

(21) Anmeldenummer: **86104588.8**

(22) Anmeldetag: **04.04.86**

(54) **Aktivkohle und das Verfahren zur ihrer Herstellung.**

(30) Priorität: **20.07.85 DE 3525961**

(43) Veröffentlichungstag der Anmeldung:
**04.02.87 Patentblatt 87/6**

(45) Bekanntmachung des Hinweises auf die Patenterteilung:
**27.09.89 Patentblatt 89/39**

(84) Benannte Vertragsstaaten:
**BE DE FR GB IT NL**

(56) Entgegenhaltungen:
**EP-A- 0 164 492**
**DD-A- 138 013**
**DE-C- 524 614**

**ULLMANS ENCYKLOPÄDIE DER TECHNISCHEN
CHEMIE, 4. Auflage, Band 14, 1977,
Seiten 622, 623, 625, 626, Verlag Chemie, Weinheim, DE**

**Die Akte enthält technische Angaben, die nach dem
Eingang der Anmeldung eingereicht wurden und die
nicht in dieser Patentschrift enthalten sind.**

(73) Patentinhaber: **Degussa Aktiengesellschaft,
Weissfrauenstrasse 9, D-6000 Frankfurt am Main 1(DE)**

(72) Erfinder: **Karl, Alfons, Dr., Herzbergstrasse 59,
D-6466 Gründau 1(DE)**
Erfinder: **Kutz, Roland, Dr., Westfalenstrasse 6,
D-4800 Bielefeld 14(DE)**

## Beschreibung

Es ist bekannt, die Aktivierung von Braunkohlenkoks in einem Drehrohr nach dem Zusatz von 25 %iger wässriger Kaliumcarbonatlösung durchzuführen (vgl. Chem.Techn. 34 (1982) 298-300).

Aus Ullmann's Enzyklopädie der technischen Chemie 4. Auflage, 14. Band, Seiten 623, 625 und 626 ist die Gasaktivierung von Braunkohlenkoks unter Zusatz von festem oder in Wasser gelöstem Kaliumcarbonat vor der Aktivierung bekannt.

Die bekannten Verfahren haben den Nachteil, daß besonders feinporige Aktivkohlen nicht zu erhalten sind.

Bei bekannten Verfahren wird der Braunkohlenkoks in der wässrigen Katalysatorlösung vor der eigentlichen Aktivierung suspendiert. Hierdurch wird eine nicht zu kontrollierende Menge an Katalysator von dem Braunkohlenkoks aufgenommen. Dabei kann die Menge an aufgenommenem Katalysator je nach Qualität des Braunkohlenkoks schwanken. Der derart imprägnierte Braunkohlenkoks wird bei bekannten Verfahren abfiltriert, getrocknet und der eigentlichen Aktivierung unterworfen (vgl. DD-A 138 013).

Aufgrund der nicht genau kontrollierbaren Aufnahme an Katalysator ist die reproduzierbare Herstellung einer vorgegebenen Aktivkohlequalität nicht möglich.

Gemäß der älteren EP-A 164 492 ist ein Verfahren zur Herstellung von Aktivkohle bekannt, wobei Braunkohlenkoks mit Wasserdampf aktiviert und während der Aktivierungsphase mit Alkali- oder Erdalkalicarbonatlösung mittels einer Lanze besprüht wird. Dabei wird als Ausgangsprodukt Braunkohlenkoks eingesetzt, der zu Aktivkohlen mit geringeren Melasse- und Jodzahlen führt.

Weiterhin haben die nach bekannten Verfahren hergestellten Aktivkohlen den Nachteil, daß sie sich nicht mit besonderem Erfolg bei der Entfernung von Chlorkohlenwasserstoffen bei der Aufbereitung von Trinkwasser aus Grundwasser oder bei der Aufbereitung von Abwasser einsetzen lassen.

Gegenstand der Erfindung ist eine Aktivkohle, die aus Braunkohlenkoks, der die folgenden physikalischen und chemischen Eigenschaften aufweist, hergestellt wird:

| Körnung | 4–20 mm | |
|---|---|---|
| Immediatanalyse: | | |
| Wassergehalt | Gew.-% | $15 \pm 7,5$ |
| Aschegehalt | Gew.-% | $3,5 \pm 1,5$ |
| Fl. Bestandteile | Gew.-% | $4,5 \pm 2,0$ |
| Fixer Kohlenstoff | Gew.-% | $92,0 \pm 3,0$ |
| Oxidanalyse der Koksasche: | | |
| $Fe_2O_3$ | Gew.-% | $23,0 \pm 10,0$ |
| CaO | Gew.-% | $9,5 \pm 3,0$ |
| MgO | Gew.-% | $17,0 \pm 4,0$ |
| $Na_2O$ | Gew.-% | $2,5 \pm 1,0$ |
| $K_2O$ | Gew.-% | $5,0 \pm 3,0$ |
| Physikalische Kennziffern: | | |
| Rütteldichte | g/cm$^3$ | $0,75 \pm 0,05$ |
| Spezifische Oberfläche | m$^2$/g | $250 \pm 50$ |
| Methylenblautiter | ml/0,1 g | $4,0 \pm 1,0$ |

und die der Bedingung genügt, daß das Produkt aus Melassezahl mal Jodzahl dividiert durch 1000 gleich 1001 bis 4000 vorzugsweise 1001 bis 3000 und/oder das Produkt aus Melassezahl mal Methylenblautiter dividiert durch 10 gleich 1201 bis 5200 vorzugsweise 1201 bis 4201 ist.

Diese Charakterisierung ist bezeichnend für die spezifische Kombination aus feinen und groben Poren bei der erfindungsgemäßen Aktivkohle.

Die erfindungsgemäße Aktivkohle weist vorteilhafterweise bessere Adsorptionseigenschaften bei der Trinkwasseraufbereitung aus Grundwasser bzw. der Aufbereitung von Abwasser auf. Vor allem werden Chlorkohlenwasserstoffe ausgezeichnet adsorbiert und damit aus dem Wasser entfernt. Aufgrund der höheren Abriebhärte sind die erfindungsgemäßen Aktivkohlen besser regenerierbar.

Besonders vorteilhaft kann die erfindungsgemäße Aktivkohle zur Wasseraufbereitung zu Trinkwasser eingesetzt werden.

Ein weiterer Gegenstand der Erfindung ist ein Verfahren zur Herstellung der Aktivkohle aus Braunkohlenkoks, bei der das Produkt aus Melassezahl mal Jodzahl dividiert durch 100 gleich 1001 bis 4000 und/oder das Produkt aus Melassezahl mal Methylenblautiter dividiert durch 10 gleich 1201 bis 5200 beträgt, welches dadurch gekennzeichnet ist, daß man Braunkohlenkoks, der die folgenden physikalischen und chemischen Eigenschaften aufweist:

| Körnung | 4–20 mm | |
|---|---|---|
| Immediatanalyse: | | |
| Wassergehalt | Gew.-% | $15 \pm 7,5$ |
| Aschegehalt | Gew.-% | $3,5 \pm 1,5$ |
| Fl. Bestandteile | Gew.-% | $4,5 \pm 2,0$ |
| Fixer Kohlenstoff | Gew.-% | $92,0 \pm 3,0$ |
| Oxidanalyse der Koksasche: | | |
| $Fe_2O_3$ | Gew.-% | $23,0 \pm 10,0$ |
| CaO | Gew.-% | $9,5 \pm 3,0$ |
| MgO | Gew.-% | $17,0 \pm 4,0$ |
| $Na_2O$ | Gew.-% | $2,5 \pm 1,0$ |
| $K_2O$ | Gew.-% | $5,0 \pm 3,0$ |
| Physikalische Kennziffern: | | |
| Rütteldichte | $g/cm^3$ | $0,75 \pm 0,05$ |
| Spezifische Oberfläche | $m^2/g$ | $250 \pm 50$ |
| Methylenblautiter | ml/0,1 g | $4,0 \pm 1,0$ |

mit Wasserdampf in einem Drehrohr aktiviert und während der Aktivierungsphase wässrige Alkali- oder Erdalkalicarbonatlösung und/oder wässrige Alkali- oder Erdalkalihydroxid-Lösung mittels einer Lanze in das Drehrohr einsprüht.

In einer bevorzugten Ausführungsform der Erfindung kann man als Alkalicarbonat Kaliumcarbonat bzw. als Alkalihydroxid Kaliumhydroxid einsetzen.

Die Kaliumkonzentration kann, bezogen auf die eingesetzte Braunkohle 1,0 bis 8,0 Gew.-%, vorzugsweise 1,5 bis 6,0 Gew.-%, betragen.

Wesentlich ist u.a. die besondere Körnung des Braunkohlenkokses. So kann beispielsweise feingepulverter Braunkohlenkoks bei dem erfindungsgemäßen Verfahren im Drehrohr nicht eingesetzt werden.

Das erfindungsgemäße Aktivierungsverfahren wird in einem Drehrohr durchgeführt. In bekannter Weise wird die Beheizung des Drehrohres mit einem Gasbrenner, in dem z.B. Flüssiggas wie Butan oder Propan verbrannt wird, durchgeführt. Als Aktivierungsmittel wird Wasserdampf in bekannter Weise in das Drehrohr eingeführt.

Als Katalysator kann wässrige Kaliumcarbonatlösung, oder wässrige Kaliumhydroxidlösung, vorzugsweise in einer Konzentration von 10 bis 50 Gew.-%, eingesetzt werden.

Die Zugabe der wässrigen Alkali- oder Erdalkalicarbonat- bzw. hydroxidlösung kann erfindungsgemäß über eine Lanze, die als Einstoffdüse oder Zweistoffdüse ausgebildet ist, erfolgen.

Mittels dieser Lanze wird die wässrige Katalysatorlösung während der Aktivierung auf den Braunkohlenkoks in dem Drehrohr aufgesprüht.

Bevorzugt wird die Katalysatorlösung in dem in Fließrichtung des Aktivates (Braunkohlenkoks gesehen) vorderen Teil des Drehrohrofens zugesetzt.

In einer besonders bevorzugten Ausführungsform wird die Katalysatorlösung in dem Kopf des Drehrohrofens zugesetzt.

Die Aktivierungstemperaturen können bei dem erfindungsgemäßen Verfahren in Fließrichtung des Aktivates (Braunkohlenkoks) im vorderen Teil des Drehrohrofens zwischen 800 und 1000°C; vorzugsweise 900 - 930°C, im mittleren Teil zwischen 800 und 970°C, vorzugsweise 870-900°C, und im hinteren Teil zwischen 720 und 920°C, vorzugsweise 770 - 800°C liegen.

Das erfindungsgemäße Verfahren hat den Vorteil, daß die Zugabe der Katalysatorlösung gezielt in der Menge, bezogen auf die eingesetzte Menge an Braunkohlenkoks, gesteuert werden kann.

Bei dem erfindungsgemäßen Verfahren entfallen vorteilhafterweise die Filtrier-und Trockenstufe, die bei bekannten Aktivierungsverfahren, die die Imprägnierstufe verwenden, notwendig sind.

Beispiele

Braunkohlenkoks mit den folgenden, in der Tabelle 1 aufgeführten, physikalisch-chemischen Daten.:

| Tabelle 1 | | |
|---|---|---|
| Körnung | 4–20 mm | |
| Immediatanalyse: | | |
| Wassergehalt | Gew.-% | $15,0 \pm 7,5$ |
| Aschegehalt | Gew.-% | $3,5 \pm 1,5$ |
| Fl. Bestandteile | Gew.-% | $4,5 \pm 2,0$ |
| Fixer Kohlenstoff | Gew.-% | $92,0 \pm 3,0$ |
| Oxidanalyse der Koksasche: | | |
| $Fe_2O_3$ | Gew.-% | $23,0 \pm 10,0$ |
| CaO | Gew.-% | $9,5 \pm 3,0$ |
| MgO | Gew.-% | $17,0 \pm 4,0$ |
| $Na_2O$ | Gew.-% | $2,5 \pm 1,0$ |
| $K_2O$ | Gew.-% | $5,0 \pm 3,0$ |
| Physikalische Kennziffern: | | |
| Rütteldichte | $g/cm^3$ | $0,75 \pm 0,05$ |
| Spezifische Oberfläche | $m^2/g$ | $250 \pm 50$ |
| Methylenblautiter | ml/0,1 g | $4,0 \pm 1,0$ |

wird in einem Drehrohrofen mit Wasserdampf aktiviert. Als Katalysator wird wässrige Kaliumhydroxidlösung über eine mit einer Einstoffdüse ausgestatteten Lanze am Kopf des Drehrohrofens hinzugegeben. Der Austrag des fertigen Aktivates erfolgt über ein Trompetenrohr in Fließrichtung des Aktivats (Braunkohlenkoks) am hinteren Ende des Drehrohrofens. Das Aktivat wird mit Wasser gewaschen und anschliessend getrocknet. Als Brenngas wird Flüssiggas (Propan/Butan) eingesetzt.

Die einzelnen Daten der Beispiele sind in der Tabelle 2 aufgeführt:

Tabelle 2

| Versuchszeitraum | | Beispiel 1 | Beispiel 2 | Beispiel 3 |
|---|---|---|---|---|
| Kohlendurchsatz (Trockensub.) | kg/h | 315 | 345 | 360 |
| Katalysator (50%ige wässr. Lösung) | | KOH | KOH | KOH |
| Kat.-Konzentration | G-% | 6,3 | 5,8 | 5,5 |
| Zugabeart | | Lanze | Lanze | Lanze |
| Ofen-Ausbeute | G-% | 42,0 | 44,0 | 48,0 |
| Ofentemperaturen | °C | | | |
| $T_1$ | | 895 (890–920) | 895 (820–940) | 930 (800–1000) |
| $T_2$ | | 895 (880–910) | 875 (800–900) | 895 (920–970) |
| $T_3$ | | 780 (770–790) | 765 (720–780) | 800 (750–920) |
| Mittl. Ofentemperatur | °C | 855 | 845 | 875 |
| Gasmenge | $m^3$/h | 75 | 75 | 75 |
| Brennerluftmenge | $m^3$/h | 500 | 500 | 500 |
| Dampfmenge | kg/h | 540* | 550* | 600* |
| Zusatzluftmenge | $m^3$/h | 400 | 440 | 400 |
| Zug (Sekundärluft) | mm WS | 3,6 | 3,6 | 3,6 |
| Methylenblautiter | ml/0,1 g | 20,5 | 15,5 | 15,0 |
| Jodzahl | mg/1,0 g | 1150 | 1010 | 930 |
| Melasse-mg-Zahl | mg | 870 | 2500 | 1700 |
| Benzolbeladungen | G-% | | | |
| 9/10 (288 mg/l) | | 42,2 | 37,5 | 35,4 |
| 1/10 (32 mg/l) | | 36,9 | 32,2 | 29,1 |
| 1/100 (3,2 mg/l) | | 27,4 | 26,1 | 25,1 |
| $\dfrac{\text{Melassezahl} \times \text{Jodzahl}}{1000}$ | | 1001 | 2525 | 1581 |
| $\dfrac{\text{Melassezahl} \times \text{Methylend.}}{10}$ | | 1784 | 3750 | 2550 |
| Rütteldichte | g/l | 550 | 580 | 585 |
| Stoßhärte | % | 88,3 | 87,6 | 86,6 |
| Rollabriebhärte | % | 84,8 | 88,5 | 89,0 |
| Aschegehalt | Gew.-% | 7,5 | 7,6 | 9,5 |

* zuzüglich des Wassergehaltes des Kokses

Die erhaltenen Aktivkohlen weisen die folgenden Produkte aus Melassezahl mal Jodzahl dividiert durch 1.000 auf:
Beispiel 1 : 1001
Beispiel 2 : 2525
Beispiel 3 : 1581
Das Produkt aus Melassezahl mal Methylenblautiter dividiert durch 10 beträgt:
Beispiel 1 : 1784
Beispiel 2 : 3750
Beispiel 3 : 2550.
An den Aktivkohlen gemäß Beispiel 2 wurden Adsorptionsisothermen mit Chloroform, 1,1,1-Trichlorethan, Trichlorethen und Tetrachlorethen bestimmt.
Die Adsorptionsisothermen lassen sich durch den $K_F$-Wert (Beladung q bei einer Restkonzentration von 1 mg/l) und die Steigung n der Geraden eindeutig beschreiben. Diese Werte sind für die erfindungsgemäße A-Kohle (Beispiel 2) und für das bereits im Handel befindliche Braunkohleaktivat DeguSorb® HKW I/W 371 in der Tabelle 3 aufgeführt:

| CKW | Beispiel 2 | | DeguSorb® HKW I/W 371 | |
|---|---|---|---|---|
| | $K_F$ (G.-%) | n | $K_F$ (G.-%) | n |
| $CHCl_3$ | 1.33 | 0.60 | 1.32 | 0.69 |
| $CCl_3-CH_3$ | 2.50 | 0.58 | 3.15 | 0.70 |
| $CCl_2=CHCl$ | 6.10 | 0.41 | 8.18 | 0.49 |
| $CCl_2=CCl_2$ | 36.5 | 0.59 | 27.7 | 0.63 |

| DeguSorb® HKW I/W 371 – Spezifikation | | |
|---|---|---|
| Kornkohle | | |
| Körnung | mm | 0,5–2,0 |
| Rütteldichte | $kg/m^3$ | 400 ± 20 |
| Wassergehalt bei Abpackung | % | < 8 |
| Aschegehalt | % | < 12 |
| Jodzahl | mg/g | ca. abt. 1000 |
| Phenolbeladung in Wasser bei | 1 ppm | > 4% |
| Phenolbeladung in Wasser bei | 0,1 ppm | > 2% |
| Methylenblautiter nach DAB 6 | ml | > 16 |
| Chlorhalbwertslänge (DIN 19603) | cm | < 8 |

Prinzip der Bestimmungsmethode

Die wässrige Lösung der zu untersuchenden Substanz und die gewünschte Menge Aktivkohle werden in einem abgeschlossenen Gefäss verrührt. Nach Gleichgewichtseinstellung wird die Restkonzentration der gelösten Substanz durch head-space-Analyse bestimmt. Bei flüchtigen Substanzen erzielt man ausserdem durch Analyse im Gasraum über der Flüssigkeit eine höhere Empfindlichkeit als durch Analyse der Lösung. Vor der Messung wird mit definierten Konzentrationen ohne Aktivkohlezusatz eine Eichkurve ermittelt. Die Messung erfolgt gleichzeitig mit einer der Zahl der gewünschten Messpunkte entsprechenden Anzahl Gefässe mit verschiedenen Aktivkohle-Einwaagen. Die adsorbierte Menge Substanz wird wie üblich aus der Restkonzentration erreichnet.

Versuchsdurchführung

1. Apparatur

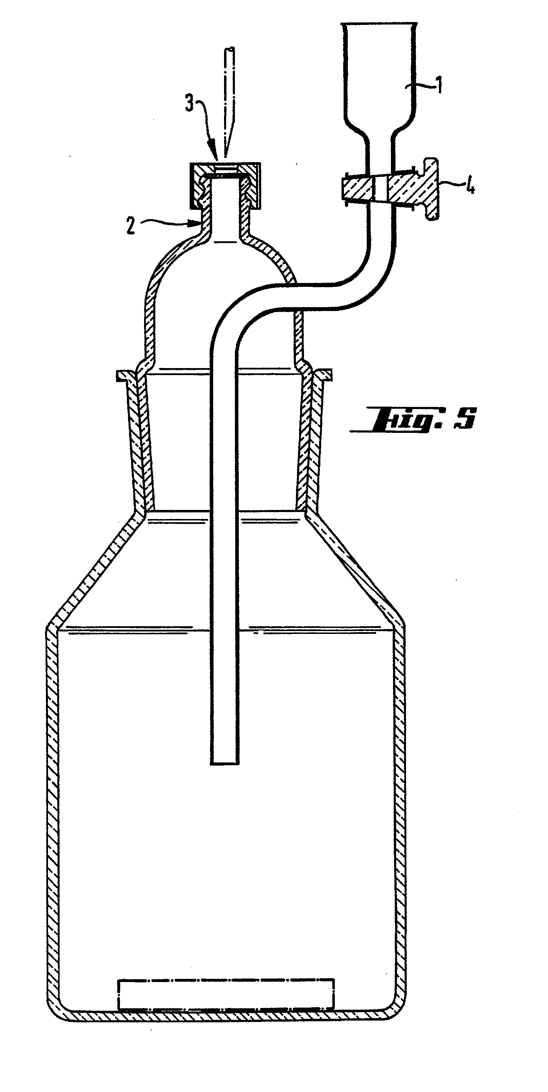

Das zur Durchführung der Versuche verwendete Gerät zeigt Figur 5. Dieses Gerät besteht aus einer 0,5 1-Steilbrustflasche mit Normschliff 45/4 und einem speziell für diesen Anwendungszweck angefertigten Aufsatz. Der Aufsatz hat einen Probenahmestutzen 2 mit Membranverschluss 3 und ein in das Innere der Flasche ragendes Zulaufrohr mit Hahn 4 und Trichter 1. Am Boden der Flasche befindet sich ein Rührmagnet. Das Volumen der Flaschen mit den zugehörigen Aufsätzen muss durch Auswägen mit Wasser genau bestimmt werden.

2. Eichkurve

Vor der Isothermenmessung wird wie folgt eine Eichkurve ermittelt:
Die Messgefässe werden blasenfrei mit destilliertem Wasser gefüllt, verschlossen und sodann in einem Reihenrührgerät mit Wasserbad und Einhängethermostat auf 20°C temperiert. Durch die Membran 3 werden mittels einer Injektionsspitze in die einzelnen Flaschen steigende Mengen der zu untersuchenden Substanz (z.B. Trichlorethen) eingespritzt. Zwecks leichterer Dosierung der sehr kleinen Mengen kann auch eine Lösung (z.B. in Methanol 1:10) eingespritzt werden. Nach 10 Min. Rühren spritzt man mit einer Gasspritze durch die Membran je 10 ml Luft ein, wobei der Hahn 4 zu öffnen ist. Nach weiteren 40 Min. Rühren wird wiederum mit einer Spritze eine Probe aus dem Gasraum entnommen und im Gaschromatograph untersucht. Die Anzeige im Gaschromatograph ist im Bereich von 0,2 mg/l bis ca. 50 mg/l der Konzentration proportional. Es ist zweckmässig bei der eigentlichen Bestimmung der Isotherme einen Eichpunkt mitzumessen.

## 3. Adsorptionsisothermen

Für vier Messpunkte benötigt man einschließlich der Null-Probe fünf Flaschen. In die Flaschen werden steigende Mengen der gemahlenen und getrockneten Aktivkohle eingewogen. Danach werden die Flaschen wie oben beschrieben mit Wasser gefüllt, verschlossen und in das Magnetrührgerät eingesetzt. In jede Flasche wird dann mittels Injektionsspritze die zu untersuchende Substanz (z.B. Trichlorethen) eingespritzt. Die einzuspritzende Menge ist so zu bemessen, dass in allen Flaschen die gleiche Konzentration erhalten wird. Dabei ist das etwas unterschiedliche Volumen der einzelnen Gefässe zu berücksichtigen. Auch die Aktivkohle-Einwaage ist bei der Auswertung auf das jeweilige Lösungsvolumen zu beziehen.

Nach 2½-stündigem Rühren bei 20°C wird, wie bereits angegeben, 10 ml Luft eingespritzt und nach weiteren 40 Min. erfolgt gaschromatographisch Analyse einer Probe aus dem Gasraum. Bei jeder Versuchsreihe wird eine Null-Probe ohne Aktivkohle gemessen. Aus den über die Eichkurve ermittelten Restkonzentrationen c werden wie üblich die Beladungen der Aktivkohle berechnet.

Da die Adsorption organischer Substanzen aus wässriger Lösung mit der Freundlich-Gleichung beschrieben werden kann,

$$q = K_F \cdot c^n$$

Darin bedeuten:

q Gleichgewichtsbeladung in mg/g

c Restkonzentration in mg/l

$K_F$,n Konstanten

werden die Wertepaare in einem Diagramm mit logarithmischer Teilung der Abszisse (Restkonzentration) und logarithmischer Teilung der Ordinate (Gleichgewichtsbeladung) aufgetragen und die Datenpunkte durch eine Gerade ausgeglichen.

Die Konstante $K_F$ entspricht einem Beladungswert q bei einer Restkonzentration von 1 mg/l, die Steigung der Gerade dem Exponenten n der Freundlich-Gleichung. Durch die beiden Werte kann die Adsorptionsisotherme eindeutig charakterisiert werden.

Neben der beschriebenen graphischen Ermittlung kann auch eine rechnerische Regression der Datenpunkte zur Bestimmung der Isothermenkonstanten durchgeführt werden.

Die graphische Darstellung der gemessenen Adsorptionsisothermen sind in der Zeichnung dargestellt.

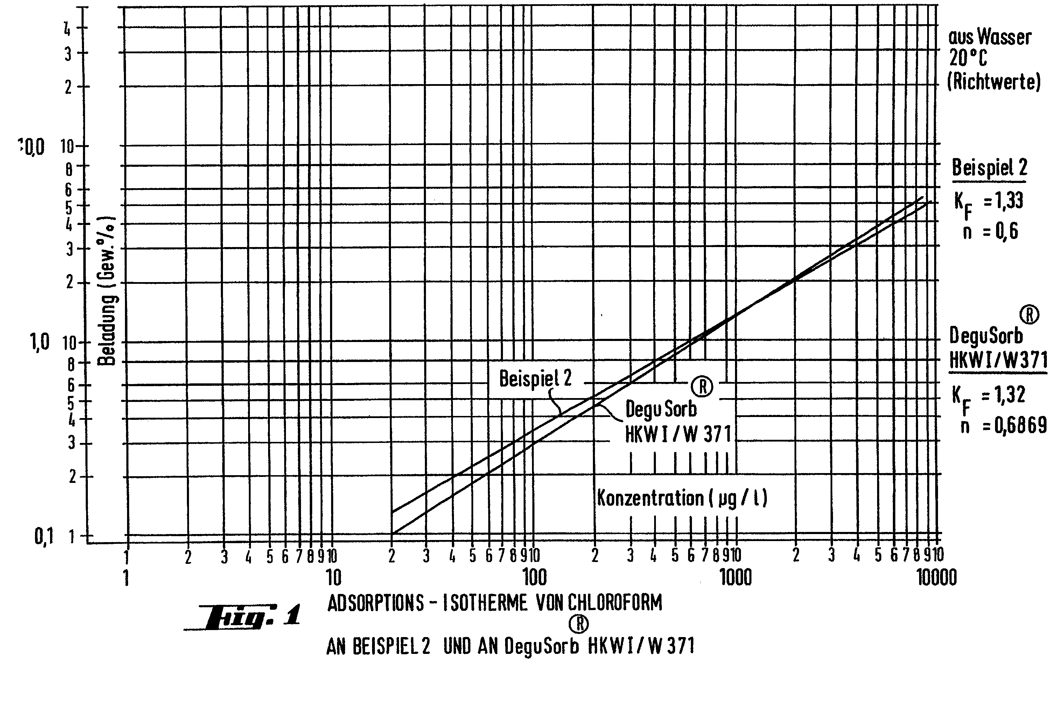

Es zeigen Figur 1 die Adsorpitonsisotherme mit Chloroform

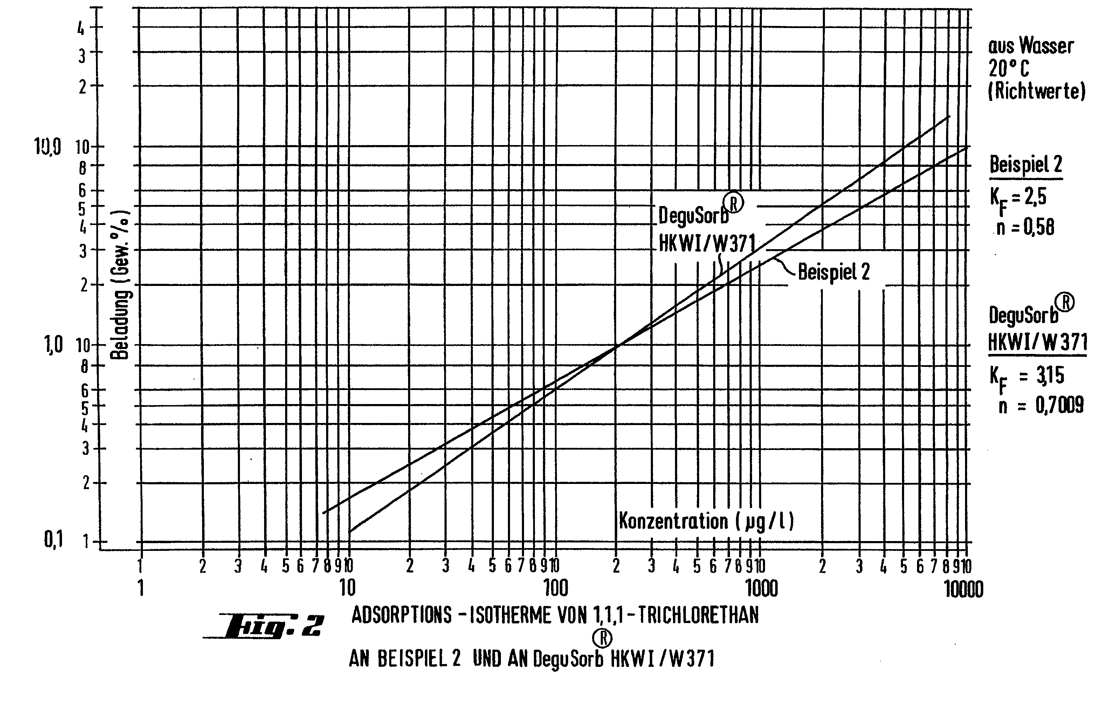

Figur 2 die Adsorptionsisotherme mit 1,1,1-Trichlorethan

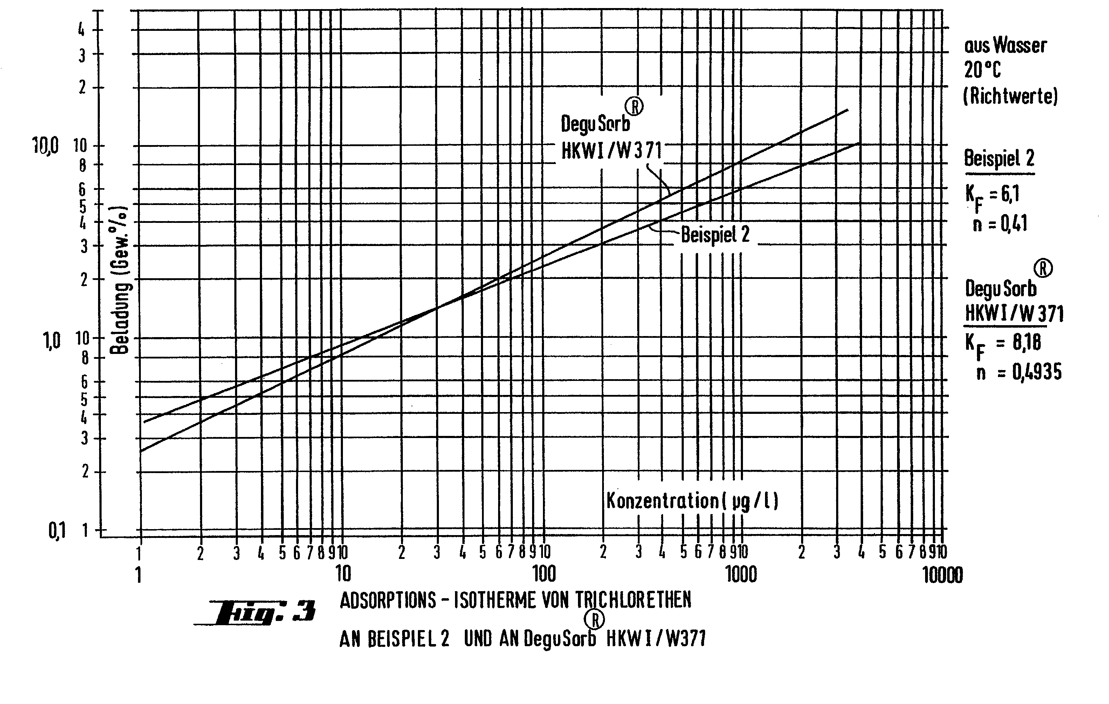

Figur 3 die Adsorptionsisotherme mit Trichlorethen

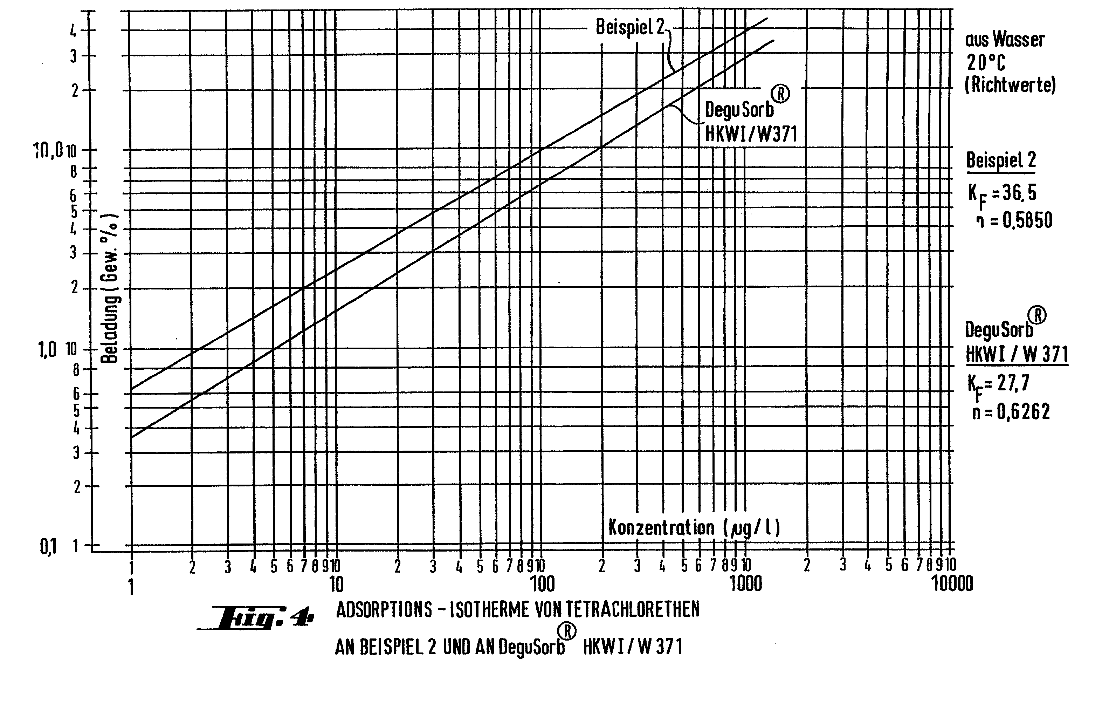

Figur 4 die Adsorptionsisotherme mit Tetrachlorethen

Die Bestimmung der Melassezahl in den Beispielen 1 bis 3 erfolgt auf die folgende Weise:

## Bestimmung der Entfärbungsleistung von Aktivkohle aus Melasse (LAT vom 29.09.1982)

### 1. Vorbemerkung:

Zur Kennzeichnung der Adsorptionskapazität von für die Anwendung in der Flüssigphase vorgesehene Aktivkohlen dient u.a. die Entfärbung von Melasselösung. Die zu untersuchende Kohle wird hierzu stets in Pulverform angewendet. Kornkohlen werden auf eine Korngröße 100 % < 0,1 mm, 80 % < 40 μm, (Prüfsieb DIN 4188) gemahlen. Als Vergleichsmaßstab wird die Entfärbungsleistung einer Standard-Kohle benutzt.

### 2. Prüfmelasse:

Die Auswahl und Eichung einer geeigneten Melasse wird für alle Parteien vom LAT vorgenommen. Sie muß bezüglich Eigenschaften und Farbstoffzusammensetzung bestimmten Anforderungen entsprechen.

### 3. Standardkohlen:

Als Standardkohlen werden folgende Kohlen in ungetrocknetem Zustand verwendet und mit der zu untersuchenden Kohle verglichen:

a) Haupt-Standard-Carboraffin Wi-La-Me A 167:

(Bezeichnung Labor Ffm); 200 mg Trockensubstanz

b) Sekundär-Standard-Carboraffin:

Eine gegen den Hauptstandard geeichtes Carboraffin mit gleicher Entfärbungsleistung

Diese Standard-Kohlen gewährleisten Vergleichbarkeit der Ergebnisse aus den verschiedenen Labors der Partner des LAT. Grundsätzlich kann auch auf einen anderen Standard bezogen werden. Dann ist jedoch die Vergleichbarkeit nicht mehr gegeben.

7

#### 4. Farbmessung:

Die Entfärbung der Melasselösung wird optisch gemessen. Hierzu können folgende Geräte verwendet werden:

a) Lange-Kolorimeter mit 34,4 mm Küvette und zugehörigem Wärmeschutzfilter. Anstelle des Original-Wärmeschutzfilters kann auch ein Filter der Glassorte KG 3 der Firma Schott & Fen., Mainz, Dicke 5 mm, verwendet werden.

b) das Lange-Fotometer LP 1 W mit 4 cm Küvette und der im LB-Nr. 25 330 angegebenen Filterkombination, nämlich

6 + 1 mm KG 3
+ 1,4 mm NG 9
+ 1 mm BG 38

Andere Küvettenlängen als die angegebenen und andere Filter sind nicht zulässig, da sonst abweichende Ergebnisse erhalten werden.

#### 5. Einstellung der Melasselösung und Durchführung der Entfärbung:

42 g Prüfmelasse (Zuckerfabrik Wabern 1976/77) werden eingewogen, mit dest. Wasser von Zimmertemperatur verdünnt, mit 0,1 n NaOH oder 0,1 n HCl auf den pH-Wert 7,0 ± 0,1 eingestellt und auf 1,0 Liter aufgefüllt. Nun fügt man 20 ml einer $NaH_2PO_4/Na_2HPO_4$-Pufferlösung vom pH 7,0 hinzu. Die Melasselösung muß nach 10-minütigem Erwärmen im Wasserbad auf 80-82°C den pH-Wert 7,0 ± 0,1 besitzen. Die Lösung wird anschließend (ohne weitere Filtration) zur Ermittlung der Entfärbungskraft von Aktivkohle benutzt.

Hierbei wird die jeweils festgesetzte Menge Aktivkohle in ungetrocknetem Zustand mit 100 ml der vorgewärmten Melasselösung in einem Porzellanbecher von 300 ml angerührt und 10 Minuten lang in einem Thermostaten unter mehrfachem Schütteln oder Rühren auf 80-82°C gehalten. Anschließend wird der pH-Wert der Suspension nach Entnahme aus dem thermostatisierten Wasserbad innerhalb von 5 Minuten mit einer pH-Einstabmeßkette bestimmt und, falls erforderlich, durch Zugabe von 2 n-NaOH oder HCl wieder auf den Wert 7,0 ± 0,1 gebracht. Die Feineinstellung wird mit 0,1 n-NaOH oder 0,1 n-HCl vorgenommen.

Die Temperatur der Suspension soll bei der pH-Messung im Bereich 70°C liegen. Das pH-Meter wird auf die Mitteltemperatur 75°C eingestellt. Die pH-Einstabmeßkette muß zum Einsatz in Suspension in diesem Temperaturbereich geeignet sein. Anschließend wird die heiße Lösung durch ein Faltenfilter (Firma Schleicher und Schüll Nr. 602 1/2h) filtriert und das Filtrat, nachdem die Lösung vollständig durchgelaufen ist, noch zweimal über das gleiche Filter zurückgegossen. Nach Abkühlung auf ≤ 30°C, spätestens nach 2 Stunden, wird die Extinktion der Lösung gemessen. Vor der Messung wird der pH-Wert an Stichproben, optimal an allen nachgestellten Lösungen nochmals überprüft und ggf. durch weitere Zugabe von n/10 NaOH oder HCl auf den Wert 7,0 ± 0,1 eingestellt.

Zur Qualitätskontrolle der verwendeten Melasse wird bei jeder Aktivkohleprüfung eine 100 ml-Probe ohne Anwendung von Aktivkohle mitbehandelt und durch Faltenfilter Nr. 602 1/2h (Firma Schleicher u. Schüll) filtriert. Nach der Filtration, durch die in der Melasselösung ausgeflockte Erdalkaliphosphate entfernt wurden, ist die Lösung absolut blank. Sie muß im Lange-Kolorimeter (Schichtdicke 34,4 mm Wärmeschutzfilter) eine Extinktion von 0,76-0,80 aufweisen, um den Qualitätsanforderungen zu entsprechen (bei Verwendung anderer Küvettenlängen entsprechend einer Extinktion/cm von 0,22-0,23). Werden die angegebenen Extinktionswerte nicht erreicht, muß die Prüfmelasse-Einwaage verändert werden.

#### 6. Ermittlung der Melassezahl über die Melasseisotherme

Zur Bestimmung der Melasseisotherme werden von jeder Prüfkohle und von der Standardkohle je 5 Punkte, wie unter 5. angegeben, gemessen, mit z.B. 0,2, 0,4, 0,6, 0,8 und 1,2 g Aktivkohleeinwaage auf 100 ml Prüflösung. Je nach zu erwartender Entfärbungsleistung können auch geringe oder höhere Kohleeinwaagen gewählt werden.

Die Auswertung erfolgt graphisch, indem man die Meßpunkte der Prüfkohle und der Standard-Kohle auf doppeltlagorithmischem Koordinationspapier mit der Restextinktion als Abszissenmaßstab und der Beladung der Aktivkohle als Ordinatenmaßstab einträgt. Die Meßpunkte jeder Kohle bilden annähernd eine Gerade (Melasseisotherme). Aus den Melasseisothermen bestimmt man, wie unten angegeben, als Kennzahlen den Melassefaktor und die Melassezahl.

Da die adsorbierte Farbstoffmenge nur durch die Extinktion der Lösung nicht aber gewichtsmäßig erfaßt werden kann, gibt man die Beladung vereinfach als

$$\frac{\Delta E}{g}$$

an.

Hierin bedeutet:
$\Delta E = E_0 - E = $ Extinktionsdifferenz
$E_0 = $ Extinktion ohne Aktivkohle
$E = $ Extinktion nach Aktivkohleanwendung
$g = $ Aktivkohleeinwaage in Gramm

Zur Ermittlung des Melassefaktors liest man aus den Isothermen bei einer Ext. von 0,38 (Lange-Kolorimeter) = Ext/cm von 0,11 die Beladung der Standardkohle und der Prüfkohle ab und bildet den Quotienten:

$$\text{Melassefaktor} = \frac{\text{Beladung d. Standardkohle}}{\text{Beladung d. Prüfkohle}}$$

Die richtige Dimension der Beladung bei Verwendung der Extinktion als Konzentrationsmaß ist:

$$\text{Beladung} = \frac{\Delta E \cdot V}{1 \cdot g}$$

Für die Melasseistoherme gilt annähernd die Freundlichsche Isothermengleichung:

$$\frac{\Delta E \cdot V}{1 \cdot g} = K \cdot E^n$$

Hierin bedeuten:
$V = $ Lösungsvolumen
$1 = $ Küvettenlänge
$K = $ Konstante der Freundlich-Gleichung
$n = $ Exponent der Freundlich-Gleichung

Da die Prüfkohle und die Standardkohle unter gleichen Bedingungen (Lösungsvolumen, Küvettenlänge) gemessen werden, kann man bei der Bestimmung von Melasse-Faktor bzw. -Wert durch 1 u. V kürzen. Es ist daher zulässig, die Beladung vereinfacht als

$$\frac{\Delta E}{g}$$

anzugeben.

Die Melassezahl erhält man durch Multiplikation des Melassefaktors mit der Standardkohle-Einwaage (mg):

Melassezahl = Melassefaktor x 200 mg

Die Melassezahl gibt an, wieviel Milligramm der zu prüfenden Aktivkohle erforderlich sind, um denselben Melasse-Entfärbungsgrad wie mit 200 mg der Haupt-Standard-Aktivkohle zu erreichen.

Die <u>Bestimmung der Jodzahl</u> in den Beispielen 1 bis 3 erfolgt auf die folgende Weise:

Man bestimmt diejenige Menge Jod, die aus einer wässrigen Jodlösung unter bestimmten Bedingungen von 1 g Aktivkohle adsorbiert werden. Der erhaltene Wert ist ein Maß für die gesamte wirksame Oberfläche der Aktivkohle.

<u>Ausführung:</u>

10 g Aktivkohle werden in einer Labormühle soweit pulverisiert, daß 80 % durch ein 40 μm-Sieb nach DIN 4188 gehen. Danach wird 3 Stunden bei 150°C im Trockenschrank getrocknet.

Von der, getrockneten Kohle werden 1 g analytisch genau eingewogen, in einen 250 ml-Erlenmeyer-Schliffkolben gegeben und mit 10 ml HCl 5 %ig versetzt.

Man erhitzt zum Sieden und beläßt 30 Sekunden bei der Siedetemperatur.

Nach dem Abkühlen auf Raumtemperatur werden 100 ml 0,1 n Jodlösung in den Kolben gegeben. Man verschließt die Flasche und schüttelt intensiv 30 Sekunden.

Nach dem Schütteln wird durch ein trockenes Faltenfilter filtriert. Der Rückstand auf dem Filter wird nicht ausgewaschen.

Die ersten 20 - 30 ml des Filtrats werden verworfen. Das Restfiltrat wird in ein Becherglas gegeben und mit einem Glasstab homogenisiert.

50 ml des Filtrats werden in einem 250 ml-Erlenmeyer-Kolben-gegeben und mit 0,1 n $Na_2S_2O_3$-Lösung titriert bis die Farbe der Lösung hellgelb ist.

Danach werden 2 ml der gesättigten Stärkelösung zugegeben und bis zum Verschwinden der blauen Farbe titriert.

Berechnung:

$$X = \frac{1269 - 27,918 \cdot V}{E}$$

X = Jodzahl in mg Jod/1 g Aktivkohle
E = Aktivkohleeinwaage (g)
V = Verbrauch an 0,1 n $Na_2S_2O_3$-Lösung (ml)
Die Restkonzentration in der Lösung errechnet sich folgendermassen (ausgedrückt als Nomalität):

$$C = \frac{0,1 \cdot V}{50} = 0,002 \cdot V$$

Die Restkonzentration des Filtrats muß bei 0,02 n liegen. Ansonsten muß die gesamte Bestimmung mit anderer Einwaage wiederholt werden. Es besteht jedoch auch die Möglichkeit, Restkonzentrationen von 0,008 n bis 0,035 n mit Hilfe von Korrekturfaktoren auf die Restkonzentration 0,02 n umzurechnen.

Die Bestimmung des Methylenblautiter in den Beispielen (Entfärbung von Methylenblaulösung durch Aktivkohlen)

Die Bestimmung erfolgt in Anlehnung an die Vorschrift des DAB VII, zweiter Nachtrag 1975
Es wird ermittelt, wieviel ml Methylenblaulösung mit einer bestimmten Aktivkohlemenge in vorgegebener Zeit vollständig entfärbt werden.
Hierzu wird eine Methylenblaulösung 0,15 %ig (3 g /2l) wie folgt hergestellt. (Die Bestimmung des Methylenblautiters an dem Braunkohlenkoks erfolgt mit einer 0,015 %igen Methylenblaulösung).
3,0 g Methylenblau (nach DAB VII) werden in einem 2l-Meßkolben in 1000 ml $H_2O$ dest. unter 8-stündigem Erwärmen bei ca. 40°C gelöst. Nach dem Abkühlen wird auf 2 l aufgefüllt. Die zu verwendende Lösung sollte ca. 20°C haben.

Ausführungsbestimmung:

0,1 g trockene pulverförmige Aktivkohle, in einer Labormühle soweit vermahlen, daß 80 % durch ein 40 μm-Sieb nach DIN 4188 gehen oder die 0,1 g trockene Kohle entsprechende Handelsware werden analytisch genau eingewogen und in einen 50 ml-Meßzylinder mit Schliffstopfen gegeben.
Während genau 5 Minuten wird portionsweise unter ständigem Schütteln soviel Methylenblaulösung zugegeben, daß vollständige Entfärbung eintritt.
Die danach abgelesene Zahl der Milliliter Methylenblaulösung ist der ungefähre Wert der Methylenblautiters.
Zwei weitere Proben mit 1 ml weniger bzw. 1 ml mehr der o.g. gefundenen Anzahl ml Methylenblaulösung werden genau 5 Minuten geschüttelt.
Bei der ersten Probe sollte vollständige Entfärbung eintreten, während die zweite noch schwach blau erscheinen darf.
Sind beide Proben entfärbt, so ist solange jeweils mit 1 ml mehr Methylenblaulösung 5 Minuten zu schütteln, bis eine Probe noch schwach blau erscheint.
Als Methylenblautiter wird dann die Anzahl der ml Methylenblaulösung angegeben, die zwischen der letzten vollständig entfärbten Probe und der ersten blau erscheinenden Probe liegt. Er wird angegeben in ml entfärbte 0,15 %ige Methylenblaulösung pro 0,1 g Aktivkohle.

**Patentansprüche**

1. Aktivkohle hergestellt aus Braunkohlenkoks, der die folgenden physikalischen und chemischen Eigenschaften aufweist:

| Körnung | 4–20 mm | |
|---|---|---|
| Immediatanalyse: | | |
| Wassergehalt | Gew.-% | $15 \pm 7,5$ |
| Aschegehalt | Gew.-% | $3,5 \pm 1,5$ |
| Fl. Bestandteile | Gew.-% | $4,5 \pm 2,0$ |
| Fixer Kohlenstoff | Gew.-% | $92,0 \pm 3,0$ |
| Oxidanalyse der Koksasche: | | |
| $Fe_2O_3$ | Gew.-% | $23,0 \pm 10,0$ |
| CaO | Gew.-% | $9,5 \pm 3,0$ |
| MgO | Gew.-% | $17,0 \pm 4,0$ |
| $Na_2O$ | Gew.-% | $2,5 \pm 1,0$ |
| $K_2O$ | Gew.-% | $5,0 \pm 3,0$ |
| Physikalische Kennziffern: | | |
| Rütteldichte | $g/cm^3$ | $0,75 \pm 0,05$ |
| Spezifische Oberfläche | $m^2/g$ | $250 \pm 50$ |
| Methylenblautiter | ml/0,1 g | $4,0 \pm 1,0$ |

die der Bedingung genügt, daß das Produkt aus Melassezahl mal Jodzahl dividiert durch 1000 gleich 1001 bis 4000 und/oder das Produkt aus Melassezahl mal Methylenblautiter dividiert durch 10 gleich 1201 bis 5200 ist.

2. Verfahren zur Herstellung der Aktivkohle aus Braunkohlenkoks, bei der das Produkt aus Melassezahl mal Jodzahl dividiert durch 1000 gleich 1001 bis 4000 und/oder das Produkt aus Melassezahl mal Methylenblautiter dividiert durch 10 gleich 1201 bis 5200 beträgt, dadurch gekennzeichnet, daß man Braunkohlenkoks, der die folgenden physikalischen und chemischen Eigenschaften aufweist:

| Körnung | 4–20 mm | |
|---|---|---|
| Immediatanalyse: | | |
| Wassergehalt | Gew.-% | $15 \pm 7,5$ |
| Aschegehalt | Gew.-% | $3,5 \pm 1,5$ |
| Fl. Bestandteile | Gew.-% | $4,5 \pm 2,0$ |
| Fixer Kohlenstoff | Gew.-% | $92,0 \pm 3,0$ |
| Oxidanalyse der Koksasche: | | |
| $Fe_2O_3$ | Gew.-% | $23,0 \pm 10,0$ |
| CaO | Gew.-% | $9,5 \pm 3,0$ |
| MgO | Gew.-% | $17,0 \pm 4,0$ |
| $Na_2O$ | Gew.-% | $2,5 \pm 1,0$ |
| $K_2O$ | Gew.-% | $5,0 \pm 3,0$ |
| Physikalische Kennziffern: | | |
| Rütteldichte | $g/cm^3$ | $0,75 \pm 0,05$ |
| Spezifische Oberfläche | $m^2/g$ | $250 \pm 50$ |
| Methylenblautiter | ml/0,1 g | $4,0 \pm 1,0$ |

mit Wasserdampf in einem Drehrohr aktiviert und während der Aktivierungsphase wässrige Alkali- oder Erdalkalicarbonatlösung und/oder wässrige Alkali- oder Erdalkalihydroxidlösung mittels einer Lanze in das Drehrohr einsprüht.

3. Verfahren nach Anspruch 2, dadurch gekennzeichnet, daß man als Alkalicarbonat Kaliumcarbonat bzw. als Alkalihydroxid Kaliumhydroxid verwendet.

4. Verfahren nach Ansprüchen 2 oder 3, dadurch gekennzeichnet, daß die Kaliumkonzentration, bezogen auf die eingesetzte Braunkohle, 1,0 bis 8,0 Gew.-% beträgt.

EP 0 210 333 B1

**Claims**

1. Activated carbon prepared from lignite coke having the following physical and chemical properties:

| Particle size | 4–20 mm | |
|---|---|---|
| proximate analysis: | | |
| water content | % by weight | 15 ± 7.5 |
| ash content | % by weight | 3.5 ± 1.5 |
| volatile constituents | % by weight | 4.5 ± 2.0 |
| fixed carbon | % by weight | 92.0 ± 3.0 |
| oxide analysis of the coke ash: | | |
| $Fe_2O_3$ | % by weight | 23.0 ± 10.0 |
| CaO | % by weight | 9.5 ± 3.0 |
| MgO | % by weight | 17.0 ± 4.0 |
| $Na_2O$ | % by weight | 2.5 ± 1.0 |
| $K_2O$ | % by weight | 5.0 ± 3.0 |
| physical data: | | |
| tap density | $g/cm^3$ | 0.75 ± 0.05 |
| specific surface area | $m^2/g$ | 250 ± 50 |
| methylene blue titer | ml/0.1 g | 4.0 ± 1.0 |

which meets the requirement that the product of molasses number times iodine number divided by 1000 equals 1001 to 4000 and/or the product of molasses number times methylene blue titre divided by 10 equals 1201 to 5200.

2. Process for preparing the activated carbon from lignite coke in which the product of molasses number times iodine number divided by 1000 equals 1001 to 4000 and/or the product of molasses number times methylene blue titre divided by 10 equals 1201 to 5200, characterized in that lignite coke having the following physical and chemical properties

| Particle size | 4–20 mm | |
|---|---|---|
| proximate analysis: | | |
| water content | % by weight | 15 ± 7.5 |
| ash content | % by weight | 3.5 ± 1.5 |
| volatile constituents | % by weight | 4.5 ± 2.0 |
| fixed carbon | % by weight | 92.0 ± 3.0 |
| oxide analysis of the coke ash: | | |
| $Fe_2O_3$ | % by weight | 23.0 ± 10.0 |
| CaO | % by weight | 9.5 ± 3.0 |
| MgO | % by weight | 17.0 ± 4.0 |
| $Na_2O$ | % by weight | 2.5 ± 1.0 |
| $K_2O$ | % by weight | 5.0 ± 3.0 |
| physical data: | | |
| tap density | $g/cm^3$ | 0.75 ± 0.05 |
| specific surface area | $m^2/g$ | 250 ± 50 |
| methylene blue titer | ml/0.1 g | 4.0 ± 1.0 |

is activated with steam in a rotary kiln and aqueous alkali metal or alkaline earth metal carbonate solution and/or aqueous alkali metal or alkaline earth metal hydroxide solution is sprayed into the rotary kiln by means of a lance during the activation phase.

3. Process according to claim 2, characterized in that potassium carbonate is used as the alkali metal carbonate and potassium hydroxide as the alkali metal hydroxide.

4. Process according to claim 2 or 3, characterized in that the potassium concentration, based on the lignite used, is from 1.0 to 8.0% by weight.

## Revendications

1. Charbon actif obtenu à partir de coke de lignite qui présente les propriétés physiques et chimiques suivantes:

| Granulation | 4–20 mm | |
|---|---|---|
| **Analyse immédiate:** | | |
| Teneur en eau | $15 \pm 7,5$ | % en poids |
| Teneur en cendres | $3,5 \pm 1,5$ | % en poids |
| Constituants volatils | $4,5 \pm 2,0$ | % en poids |
| Carbone fixe | $92,0 \pm 3,0$ | % en poids |
| **Analyse des oxydes des cendres de coke:** | | |
| $Fe_2O_3$ | $23,0 \pm 10,0$ | % en poids |
| CaO | $9,5 \pm 3,0$ | % en poids |
| MgO | $17,0 \pm 4,0$ | % en poids |
| $Na_2O$ | $2,5 \pm 1,0$ | % en poids |
| $K_2O$ | $5,0 \pm 3,0$ | % en poids |
| **Chiffres-indice physiques:** | | |
| Densité après vibration $g/cm^3$ | | $0,75 \pm 0,05$ |
| Surface spécifique $m^2/g$ | | $250 \pm 50$ |
| Titre en bleu de méthy-lène $ml/0,1 g$ | | $4,0 \pm 1,0$ |

qui satisfait à la condition que le produit de l'indice de mélasse par l'indice d'iode divisé par 1000 est situé entre 1001 à 4000 et/ou le produit de l'indice de mélasse par le titre en bleu de méthylène divisé par 10 est situé entre 1201 à 5200.

2. Procédé d'obtention des charbons actifs à partir de coke de lignite dans lequel le produit de l'indice de mélasse par l'indice d'iode divisé par 1000 est situé entre 1001 à 4000 et/ou le produit de l'indice de mélasse par le titre en bleu de méthylène divisé par 10 est situé entre 1201 à 5200, caractérisé en ce que l'on active le coke de lignite qui présente les propriétés chimiques et physiques suivantes:

| Granulation | 4–20 mm | |
|---|---|---|
| **Analyse immédiate:** | | |
| Teneur en eau | $15 \pm 7,5$ | % en poids |
| Teneur en cendres | $3,5 \pm 1,5$ | % en poids |
| Constituants volatils | $4,5 \pm 2,0$ | % en poids |
| Carbone fixe | $92,0 \pm 3,0$ | % en poids |
| **Analyse des oxydes des cendres de coke:** | | |
| $Fe_2O_3$ | $23,0 \pm 10,0$ | % en poids |
| CaO | $9,5 \pm 3,0$ | % en poids |
| MgO | $17,0 \pm 4,0$ | % en poids |
| $Na_2O$ | $2,5 \pm 3,0$ | % en poids |
| $K_2O$ | $5,0 \pm 3,0$ | % en poids |
| **Chiffres-indice physiques:** | | |
| Densité après vibration $g/cm^3$ | | $0,75 \pm 0,05$ |
| Surface spécifique $m^2/g$ | | $250 \pm 50$ |
| Titre en bleu de méthy-lène $ml/0,1 g$ | | $4,0 \pm 1,0$ |

avec la vapeur d'eau dans un tube tournant et, pendant la phase d'activation, on pulvérise une solution aqueuse de carbonate alcalin ou alcalino-terreux et/ou une solution d'hydroxyde alcalin ou alcalino-terreux à l'aide d'une lance dans le tube tournant.

3. Procédé selon la revendication 2, caractérisé en ce qu'on utilise comme carbonate alcalin, du carbonate de potassium ou comme hydroxyde alcalin de l'hydroxyde de potassium.

4. Procédé selon les revendications 2 ou 3, caractérisé en ce que la concentration en potassium – rapportée au lignite mis en œuvre – s'élève à 1,0 à 8% en poids.

Beladung (Gew.%)

aus Wasser
20°C
(Richtwerte)

Beispiel 2
$K_F = 1{,}33$
$n = 0{,}6$

DeguSorb®
HKW I / W 371
$K_F = 1{,}32$
$n = 0{,}6869$

Beispiel 2

DeguSorb®
HKW I / W 371

Konzentration ($\mu$g / l)

**Fig. 1** ADSORPTIONS - ISOTHERME VON CHLOROFORM
AN BEISPIEL 2 UND AN DeguSorb® HKW I / W 371

EP 0 210 333 B1

aus Wasser
20°C
(Richtwerte)

Beispiel 2
$K_F = 2,5$
$n = 0,58$

DeguSorb®
HKWI/W371
$K_F = 315$
$n = 0,7009$

Beispiel 2

DeguSorb®
HKWI/W371

Konzentration ( µg / l )

Beladung ( Gew.% )

**Fig. 2**   ADSORPTIONS – ISOTHERME VON 1,1,1–TRICHLORETHAN
AN BEISPIEL 2  UND AN DeguSorb® HKWI /W371

**Fig. 3** ADSORPTIONS – ISOTHERME VON TRICHLORETHEN
AN BEISPIEL 2 UND AN DeguSorb® HKW I / W371

**Fig. 4** ADSORPTIONS – ISOTHERME VON TETRACHLORETHEN
AN BEISPIEL 2 UND AN DeguSorb® HKWI / W 371

EP 0 210 333 B1

EP 0 210 333 B1

Fig. 5